# EUROPÄISCHE PATENTSCHRIFT

(11) **EP 3 330 737 B1**
(45) Veröffentlichungstag und Bekanntmachung des Hinweises auf die Patenterteilung: **30.06.2021**
(21) Anmeldenummer: 17202560.3
(22) Anmeldetag: 20.11.2017
(51) Int. Cl.: G01S 13/931, H01Q 1/32, H01Q 1/42, H01Q 1/52, H01Q 17/00, G01S 7/02

(54) **RADARSENSOR FÜR EIN FAHRZEUG UND VERFAHREN ZUM ZUSAMMENBAU EINES RADAR-SENSORS**
RADAR SENSOR FOR A VEHICLE AND METHOD FOR ASSEMBLING A RADAR SENSOR
CAPTEUR RADAR POUR UN VÉHICULE ET PROCÉDÉ D'ASSEMBLAGE D'UN CAPTEUR RADAR

(30) Priorität: 05.12.2016 DE 102016123437
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: Sickinger, Frank, 74321 Bietigheim-Bissingen (DE); Seybold, Marco, 74321 Bietigheim-Bissingen (DE)
(74) Vertreter: Withopf, Kristina

(56) Entgegenhaltungen:
- DE-A1-102007 042 173
- DE-A1-102012 111 184
- US-A- 2 935 725
- US-A1- 2006 092 076

## Beschreibung

### Technisches Gebiet

Die Erfindung betrifft einen Radarsensor für ein Fahrzeug, aufweisend wenigstens ein Radarsensorgehäuse, in dem wenigstens eine Radarantenne und wenigstens eine Leiterplatte angeordnet ist, wobei das Radarsensorgehäuse wenigstens ein Grundgehäuseteil mit einer Einbauseite, auf der die wenigstens eine Radarantenne und die wenigstens eine Leiterplatte eingebracht werden können, und ein Radom aufweist, mit dem die Einbauseite abgedeckt ist und durch welches beim Betrieb des Radarsensors von der wenigstens einen Radarantenne gesendete Signale und/oder zu empfangene Signale hindurch treten können, wobei das Radom wenigstens ein elektrisches Verbindungselement aufweist, das innerhalb des Radarsensorgehäuses wenigstens einen inneren Kontaktabschnitt zur elektrischen Kontaktierung der wenigstens einen Leiterplatte und außerhalb des Radarsensorgehäuses wenigstens einen äußeren Kontaktabschnitt zum Anschluss wenigstens einer elektrischen Leitung aufweist.

Ferner betrifft die Erfindung ein Verfahren zum Zusammenbau eines Radarsensors für ein Fahrzeug, bei dem wenigstens eine Radarantenne und wenigstens eine Leiterplatte in oder an einem Grundgehäuseteil eines Radarsensorgehäuses des Radarsensors angeordnet werden, ein Radom auf das Grundgehäuseteil montiert wird, wobei die wenigstens eine Leiterplatte mit wenigstens einem elektrischen Verbindungselement auf Seiten des Radoms elektrisch kontaktiert wird, und das Radom an dem Grundgehäuseteil fixiert wird, wobei das wenigstens eine Verbindungselement außerhalb des Radarsensorgehäuses mit wenigstens einer elektrischen Leitung verbunden werden kann.

### Stand der Technik

Aus der DE 10 2012 111 184 A1 ist eine Radareinrichtung für ein Fahrzeug bekannt. Die Radareinrichtung besteht aus einem wannenförmigen Gehäuse mit über einen Gehäuseboden verbundenen Seitenwänden sowie einem Gehäusedeckel. Von dem Gehäuse werden eine erste Leiterplatte mit Hochfrequenzbauteilen und eine mittels einer federelastischen Abschirmungsvorrichtung hiervon beabstandet angeordnete zweite Leiterplatte mit Niederfrequenzbauteilen aufgenommen. Die erste Leiterplatte wird auch Hochfrequenzleiterplatte beziehungsweise die zweite Leiterplatte auch Niederfrequenzleiterplatte genannt. Die Hochfrequenzleiterplatte trägt gehäusebodenseitig eine Radarantenne. An einer Querseitenwand ist eine Steckerbuchse angeformt, deren Steckerkontakte in das Gehäuse geführt sind und dort rechtwinklig abgebogen in Einpressstiften enden. Beim Einlegen einer Niederfrequenzleiterplatte in das Gehäuse werden die Einpressstifte in Einpressöffnungen der zweiten Leiterplatte teilweise eingepresst. Andere teils ähnliche Radareinrichtungen sind aus der DE102007042173 A1, DE10012111184 A1 und US2006092076 bekannt.

Der Erfindung liegt die Aufgabe zugrunde, einen Radarsensor und ein Verfahren der eingangs genannten Art gestalten, bei denen der Radarsensor einfacher zusammengebaut, insbesondere das wenigstens eine elektrische Verbindungselement einfacher mit der wenigstens einen Leiterplatte kontaktiert werden kann.

### Offenbarung der Erfindung

Diese Aufgabe wird erfindungsgemäß durch den Radarsensor gemäß Anspruch 1, bzw. durch das Verfahren gemäß Anspruch 13 gelöst.

Erfindungsgemäß wird der elektrische Kontakt zwischen dem wenigstens einen inneren Kontaktabschnitt und einer Kontaktfläche auf Seiten der wenigstens einen Leiterplatte durch das aufeinanderpressen der entsprechenden elektrischen Kontakt-Oberflächen realisiert. Es ist nicht erforderlich, dass Teile des wenigstens einen inneren Kontaktabschnitts in die wenigstens eine Leiterplatte eingesteckt oder eingepresst werden müssen, wie dies bei der aus dem Stand der Technik bekannten Radareinrichtung der Fall ist. Die Kontaktierung wird ausschließlich an der Oberfläche und durch mechanischen Druck sichergestellt. Dabei kann der mechanische Druck durch eine Anpresskraft realisiert werden, welche beim Zusammenbau des Radarsensorgehäuses zwischen dem Radom und dem wenigstens einen Grundgehäuseteil ohnehin aufgebaut wird. Auf diese Weise kann die Kontaktierung des wenigstens einen inneren Kontaktabschnitts automatisch beim Zusammenbau des wenigstens einen Grundgehäuseteils und des Radoms erfolgen.

Außerdem haben Oberflächenkontakte den Vorteil, dass die kontaktierte wenigstens eine Leiterplatte lediglich auf der kontaktierten Vorderseite frei zugänglich sein muss.

Ein Durchbohren der Leiterplatte, wie dies zur Realisierung von Eintrittsöffnungen für Einpressstifte üblich, ist erfindungsgemäß nicht erforderlich. Erfindungsgemäß können auf der der kontaktierten Seite gegenüberliegenden Rückseite der wenigstens einen Leiterplatte daher weitere Bauteile und/oder Leiterbahnen angeordnet werden. Auf diese Weise kann die wenigstens eine Leiterplatte insgesamt kleiner ausgestaltet sein. Dies ist besonders vorteilhaft, wenn mehrere elektrische Verbindungselemente vorgesehen sind, da für diese bei der bisher bekannten Verwendung von durchgängigen Bohrungen für Einpressstifte eine entsprechend große Fläche auf der Rückseite der Leiterplatte belegt würden.

Das wenigstens eine Verbindungselement führt aus dem Radarsensorgehäuse heraus. Vorteilhafterweise kann das wenigstens eine Verbindungselement außerhalb des Radarsensorgehäuses zum Anschluss von externen Signal- und/oder Stromversorgungsleitungen ausgestaltet sein.

Vorteilhafterweise kann die wenigstens eine Leiterplatte wenigstens ein elektrisches Bauteil und/oder wenigstens eine Radarantenne, insbesondere ein Substrat mit der wenigstens einen Radarantenne, tragen. Ferner können auf der wenigstens einen Leiterplatte entsprechende elektrische Leitungen insbesondere in Form von Leiterbahnen realisiert werden. Bei dem Substrat kann es sich vorteilhafterweise um ein Keramiksubstrat handeln.

Vorteilhafterweise kann die wenigstens eine Leiterplatte Bauteile insbesondere zur Signalverarbeitung und/oder Spannungsversorgung tragen. Auf diese Weise kann der Radarsensor mit einer eigenen Signalverarbeitung und/oder Spannungsversorgung ausgestattet sein.

Vorteilhafterweise kann wenigstens ein insbesondere elektrisches/elektronisches Bauteil auf einer der wenigstens einen Radarantenne abgewandten Oberfläche der wenigstens einen Leiterplatte angeordnet sein. Auf diese Weise kann ein Raum zwischen der wenigstens einen Radarantenne und der wenigstens einen Leiterplatte freigehalten werden oder mit anderen Elementen, insbesondere wenigstens einem Absorberelement, versehen werden.

Vorteilhafterweise kann die wenigstens eine Leiterplatte eine sogenannte FR4-Leiterkarte sein. Derartige Leiterkarten können eine im Vergleich insbesondere zu marktbekannten Leiterplatten aus Hartpappe größere mechanische Eigenstabilität aufweisen. FR4 (flame retardant class 4) bezeichnet bekanntermaßen eine Klasse von schwer entflammbaren und flammenhemmenden Verbundstoffen bestehend aus Epoxidharz und Glasfasergewebe.

Vorteilhafterweise kann der Radarsensor zur Verwendung in einem Radarband zwischen 76 GHz und 81 GHz ausgestaltet sein. Vorteilhafterweise kann der Radarsensor zur Verwendung in einem sogenannten Automotive Radarband ausgestaltet sein. Auf diese Weise kann der Radarsensor im Automobilbereich eingesetzt werden.

Ein Radom ist bekanntermaßen eine geschlossene Schutzhülle, die Radarantennen vor äußeren mechanischen und chemischen Einflüssen wie Wind oder Regen schützt. Bei Radoms werden bekanntermaßen Materialien verwendet, die für Radarsignale besonders gut durchlässig sind.

Der Radarsensor kann bei einem Fahrzeug, insbesondere einem Kraftfahrzeug, verwendet werden. Vorteilhafterweise kann der Radarsensor bei einem Landfahrzeug, insbesondere einem Personenkraftwagen, Lastkraftwagen, einem Bus, einem Motorrad oder dergleichen, verwendet werden. Der Radarsensor kann auch bei autonomen oder wenigstens teilweise autonomen Fahrzeugen eingesetzt werden.

Der Radarsensor kann vorteilhafterweise mit wenigstens einer elektronischen Steuervorrichtung eines Fahrzeugs, insbesondere einem Fahrerassistenzsystem und/oder einer Fahrwerksregelung und/oder einer Fahrer-Informationseinrichtung, verbunden oder Teil einer solchen sein. Auf diese Weise können die mit dem Radarsensor erfassten Objektdaten, insbesondere die Entfernung, Richtung und/oder Relativgeschwindigkeit eines Objekts relativ zum Fahrzeug, an die Steuervorrichtung übermittelt und zur Beeinflussung von Fahrfunktionen, insbesondere der Geschwindigkeit, einer Bremsfunktion, einer Lenkungsfunktion und/oder einer Ausgabe eines Hinweis- und/oder Warnsignals insbesondere für den Fahrer, verwendet werden.

Bei einer vorteilhaften Ausführungsform kann wenigstens der wenigstens eine innere Kontaktabschnitt wenigstens abschnittsweise elastisch sein. Auf diese Weise kann die elektrische Kontaktierung mit einer mechanischen elastischen Vorspannung belegt werden. So können etwaige bauteilbedingte und/oder montagebedingte Toleranzen besser ausgeglichen werden. Außerdem können so etwaige Vibrationen beim Betrieb des Radarsensors insbesondere bei der Verwendung in einem Fahrzeug besser kompensiert werden.

Die Elastizität des wenigstens einen inneren Kontaktabschnitts kann durch Wahl eines geeigneten Materials und/oder einer geeigneten Form realisiert werden.

Vorteilhafterweise kann der wenigstens eine innere Kontaktabschnitt aus einem elastischen Material sein oder ein derartiges Material aufweisen. Alternativ oder zusätzlich kann der wenigstens eine innere Kontaktabschnitt eine Form aufweisen, welche eine elastische Verformung zulässt. Vorteilhafterweise kann der wenigstens eine innere Kontaktabschnitt wenigstens eine elastisch verformbare Vorbiegung aufweisen.

Vorteilhafterweise kann wenigstens der wenigstens eine innere Kontaktabschnitt aus einem insbesondere elastischen Metall sein oder ein derartiges Metall aufweisen. Auf diese Weise können Elastizität und elektrischen Leitfähigkeit einfach kombiniert werden.

Vorteilhafterweise kann das gesamte wenigstens eine Verbindungselement wenigstens abschnittsweise elastisch sein. Auf diese Weise kann das wenigstens eine Verbindungselement einfacher hergestellt werden.

Bei einer weiteren vorteilhaften Ausführungsform kann wenigstens ein elektrisches Verbindungselement wenigstens abschnittsweise direkt oder indirekt in das Material des Radoms eingebettet sein. Wenigstens ein elektrisches Verbindungselement kann wenigstens abschnittsweise direkt in das Material des Radoms eingebettet sein. Auf diese Weise kann das wenigstens eine elektrische Verbindungselement direkt bei der Herstellung des Radoms in das Material des Radoms eingebettet, insbesondere mit dem Material des Radoms umgossen oder umspritzt, und so mit diesem gemeinsam vorgefertigt werden.

Alternativ oder zusätzlich kann wenigstens ein elektrisches Verbindungselement indirekt, insbesondere mittels einem Halteelement, in das Material des Radoms eingebettet sein. Auf diese Weise kann das wenigstens eine elektrische Verbindungselement insbesondere in dem Halteelement vormontiert und gemeinsam mit diesem in das Material des Radoms eingebettet werden.

Erfindungsgemäß weist der wenigstens eine innere Kontaktabschnitt wenigstens eine Biegung auf. Auf diese Weise kann insbesondere in Kombination mit einer elastischen Ausbildung des wenigstens einen inneren Kontaktabschnitts eine flexiblere und zuverlässigere elektrische Kontaktierung erreicht werden. Vorteilhafterweise ist wenigstens eine Biegung von der wenigstens einen Leiterplatte aus betrachtet konvex. Auf diese Weise kann bei einer Erhöhung des Anpressdrucks und einem entsprechenden elastischen Nachgeben des wenigstens einen inneren Kontaktabschnitts die Kontaktfläche des wenigstens einen inneren Kontaktabschnitts, welche an einer entsprechenden Kontaktfläche der Leiterplatte elektrisch leitend anliegt, vergrößert werden.

Bei einer weiteren vorteilhaften Ausführungsform kann der wenigstens eine innere Kontaktabschnitt dem Grundgehäuseteil zugewandt sein. Auf diese Weise kann der wenigstens eine innere Kontaktabschnitt beim anordnen des Radoms an oder in dem Grundgehäuseteil mit einer entsprechenden zugewandten Kontaktfläche der wenigstens einen Leiterplatte, welche in oder an dem wenigstens ein Grundgehäuseteil angeordnet ist, automatisch in elektrischen Kontakt gebracht werden.

Vorteilhafterweise können wenigstens eine Richtungskomponente des wenigstens einen inneren Kontaktabschnitts und wenigstens eine Richtungskomponente der entsprechenden Kontaktfläche der wenigstens einen Leiterplatte parallel zu einer Zusammenbaurichtung des Radoms mit dem wenigstens einen Grundgehäuseteil gerichtet sein. Auf diese Weise können entsprechende Montagekräfte zwischen dem Radom und dem wenigstens ein Grundgehäuseteil zugleich einen Anpressdruck des wenigstens einen inneren Kontaktabschnitts gegen die entsprechende Kontaktfläche der wenigstens einen Leiterplatte vergrößern. Auf diese Weise kann der elektrische Kontakt insgesamt verbessert werden.

Bei einer weiteren vorteilhaften Ausführungsform kann wenigstens ein elektrisches Verbindungselement wenigstens abschnittsweise in einem Halteelement angeordnet sein. Mit dem wenigstens einen Halteelement kann das wenigstens eine elektrische Verbindungselement gehalten werden. Das wenigstens eine elektrische Verbindungselement kann mit dem wenigstens einen Halteelement vorgefertigt und anschließend mit dem Radom verbunden werden. Auf diese Weise können auch mehrere elektrische Verbindungselemente in dem wenigstens einen Halteelement vorgefertigt und einfacher gemeinsam mit dem Radom verbunden werden.

Vorteilhafterweise kann das wenigstens eine elektrische Verbindungselement in dem wenigstens einen Halteelement eingebettet, insbesondere eingegossen, sein. Auf diese Weise kann das wenigstens eine elektrische Verbindungselement stabil in dem wenigstens einen Halteelement gehalten werden.

Vorteilhafterweise kann das wenigstens eine Halteelement aus einem elektrisch isolierenden Material sein. Auf diese Weise können mehrere elektrische Verbindungselemente gegeneinander elektrisch isoliert angeordnet und gehalten werden.

Vorteilhafterweise kann das wenigstens eine Halteelement aus Kunststoff sein. Auf diese Weise kann das wenigstens eine elektrische Verbindungselement einfach bei der Herstellung des Halteelements mit dem Kunststoffmaterial umspritzt oder umgossen werden.

Bei einer weiteren vorteilhaften Ausführungsform kann wenigstens ein elektrisches Verbindungselement in einer Umfangswand des Radoms angeordnet sein. Auf diese Weise kann das wenigstens eine elektrische Verbindungselement in einem Bereich angeordnet sein, wo es den Empfang und/oder das Senden von Radarsignalen nicht stört.

Bei einer weiteren vorteilhaften Ausführungsform kann wenigstens ein elektrisches Verbindungselement mit wenigstens einem inneren Kontaktabschnitt und wenigstens einem Anschlussabschnitt einteilig ausgestaltet sein. Auf diese Weise kann eine zuverlässige elektrische Verbindung zwischen dem wenigstens einen inneren Kontaktabschnitt und dem wenigstens einen Anschlussabschnitt einfach realisiert werden. Hierzu ist kein zusätzlicher Arbeitsschritt erforderlich.

Bei einer weiteren vorteilhaften Ausführungsform kann das wenigstens ein elektrisches Verbindungselement außerhalb des Radarsensorgehäuses als Teil einer elektrischen Schnellverbindung ausgestaltet sein. Eine Schnellverbindung kann schnell und einfach geschlossen werden. Außerdem kann eine Schnellverbindung zerstörungsfrei lösbar ausgestaltet sein. Bei der Schnellverbindung kann es sich vorteilhafterweise um eine Steckverbindung handeln. Das wenigstens eine Verbindungselement kann als Stecker und/oder Buchse einer Steckverbindung ausgestaltet sein.

Erfindungsgemäß weist das Radarsensorgehäuse eine Mehrzahl von elastischen Klammerelementen auf, mit denen das Radom an dem wenigstens einen Grundgehäuseteil befestigt werden kann. Mithilfe der elastischen Klammerelemente kann eine mechanische Grundspannung realisiert werden, mit welcher der wenigstens eine innere Kontaktabschnitt gegen die wenigstens eine Kontaktfläche der wenigstens einen Leiterplatte gepresst und/oder die wenigstens eine Leiterplatte festgeklemmt und fixiert werden kann.

Vorteilhafterweise kann das wenigstens eine Grundgehäuseteil Metall, insbesondere Aluminium, aufweisen oder daraus bestehen. Auf diese Weise kann ein mechanisch stabiles Radarsensorgehäuse realisiert werden.

Vorteilhafterweise kann das Radom insbesondere thermoplastischen Kunststoff, insbesondere Polybutylenterephthalat (PBT) und/oder Polyamid (PA), aufweisen oder daraus bestehen. Auf diese Weise kann das Radom für Radarsignale durchlässig sein. Es ist insbesondere nicht erforderlich, dass sowohl das wenigstens eine Grundgehäuseteil als auch das Radom aus Kunststoff bestehen. Bekanntermaßen können Gehäuseteile aus Kunststoff mit der Zeit auf sie einwirkenden Drücken nachgeben. Durch die Elastizität der Klammerelemente und/oder des wenigstens einen inneren Kontaktabschnitts kann dies kompensiert werden. So kann auch bei einer Verbindung von Gehäuseteilen, insbesondere einem Radom und/oder einem Grundgehäuseteil, aus Kunststoff über die Lebensdauer ein konstanter Druck aufrechterhalten werden. Mit der Klammerverbindung kann verhindert werden, dass sich die Verbindung zwischen dem wenigstens einen Grundgehäuseteil und dem Radom und/oder die Kontaktierung zwischen dem wenigstens einen inneren Kontaktabschnitt und der wenigstens einen Leiterplatte mit der Zeit lockert.

Vorteilhafterweise kann das Radom wenigstens ein Klemmelement zum Fixieren wenigstens einer Radarantenne aufweisen.

Vorteilhafterweise kann die wenigstens eine Radarantenne auf einem Trägerelement in Form eines insbesondere plattenförmigen Keramiksubstrats realisiert sein. Das Trägerelement kann wenigstens ein elektrisches/elektronisches Funktionsbauteil tragen.

Vorteilhafterweise kann eine Verbindung des Radoms mit dem Grundgehäuseteil so ausgestaltet sein, dass eine mechanische Vorspannung zum Festklemmen der Radarantenne bereitstellt gestellt wird. Auf diese Weise können montagebedingte, betriebsbedingte und/oder bauteilbedingte Toleranzen insbesondere im Bereich des Radarsensorgehäuses besser kompensiert werden.

Ferner wird die technische Aufgabe erfindungsgemäß bei dem Verfahren dadurch gelöst, dass die wenigstens eine Leiterplatte bei der Montage des Radoms auf das Grundgehäuseteil mit wenigstens einem inneren Oberflächen-Kontaktabschnitt wenigstens eines elektrischen Verbindungselements auf Seiten des Radoms elektrisch kontaktiert wird.

Erfindungsgemäß wird die Kontaktierung der wenigstens einen Leiterplatte mit dem wenigstens einen elektrischen Verbindungselement automatisch beim montieren des Radoms und durch den dadurch ausgeübten Anpressdruck realisiert. Die Kontaktierung erfolgt dabei lediglich mittels Oberflächenkontakten.

Im Übrigen gelten die im Zusammenhang mit dem erfindungsgemäßen Radarsensor und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: eine isometrische Darstellung eines Radarsensors mit einem Radarsensorgehäuse, in dem eine Radarantenne und eine Leiterplatte des Radarsensors angeordnet sind;
- Figur 2: eine Draufsicht auf den Radarsensor der Figur 1, wobei das Radom transparent gezeigt ist;
- Figur 3: einen Schnitt durch die Leiterplatte und das Keramiksubstrat mit der Radarantenne des Radarsensors aus den Figuren 1 und 2 im Bereich einer Anschlussleiste;
- Figur 4: einen Schnitt durch das Radarsensorgehäuse des Radarsensors aus den Figuren 1 und 2 im Bereich einer Klemmverbindung zwischen dem Radom und einem Grundgehäuseteil;
- Figur 5: einen Schnitt durch einen Teil des Radoms des Radarsensors aus den Figuren 1 und 2, in dem ein elektrischer Verbindungsstecker angeordnet ist, mit dem die Leiterplatte kontaktiert wird und der nach außen führt.

In den Figuren sind gleiche Bauteile mit gleichen Bezugszeichen versehen.

### Ausführungsform(en) der Erfindung

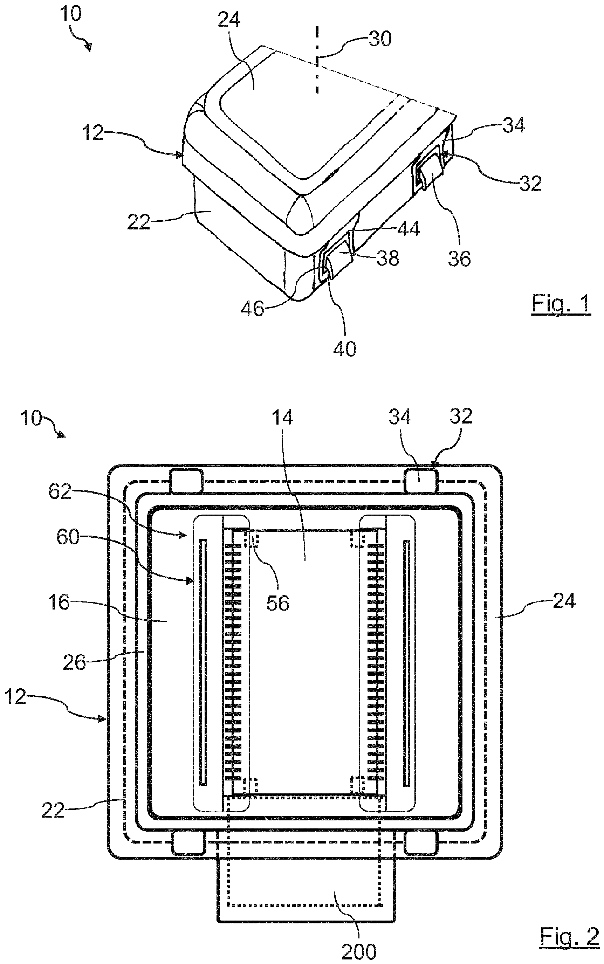

In den Figuren 1 bis 5 ist ein Radarsensor 10 in unterschiedlichen Darstellungen gezeigt. Der Radarsensor 10 kann beispielsweise in Verbindung mit einem Fahrerassistenzsystem eines Kraftfahrzeugs Verwendung finden.

Der Radarsensor 10 umfasst ein öffenbares Radarsensorgehäuse 12, in dem ein Keramiksubstrat 90 mit einer Radarantenne 14 und eine Leiterplatte 16 mit Bauteilen 18 zur Signalverarbeitung und Spannungsversorgung angeordnet sind. Ferner verfügt der Radarsensor 10 über einen Verbindungsstecker 200, welcher aus dem Radarsensorgehäuse 12 herausführt und über den entsprechende Signalleitungen und Stromversorgungsleitungen angeschlossen werden können.

Das Radarsensorgehäuse 12 ist aus einem Grundgehäuseteil 22 und einem Radom 24 zusammengesetzt. Das Grundgehäuseteil 22 ist beispielsweise aus Aluminium. Das Radom 24 ist aus Kunststoff, beispielsweise PBT.

Das Radarsensorgehäuse 12 hat insgesamt etwa die Form eines Quaders. Dabei haben das Grundgehäuseteil 22 und das Radom 24 jeweils die Form einer etwa quaderförmigen Wanne. Das Radom 24 ist auf einen Rand einer Umfangswand des Grundgehäuseteils 22 gesteckt. Eine Umfangswand 28 des Radoms 24 umgreift die Umfangswand des Grundgehäuseteils 22.

Das Grundgehäuseteil 22 weist eine Einbauseite 26 mit einer Einbauöffnung auf. Durch die Einbauöffnung können bei beim Zusammenbau des Radarsensors 10 das Keramiksubstrat 90 mit der Radarantenne 14 und die Leiterplatte 16 eingebaut werden. Die Einbauseite 26 ist mit dem Radom 24 öffenbar verschlossen. Zum Zusammenbau werden das Grundgehäuseteil 22, das Keramiksubstrat 90 mit der Radarantenne 14, die Leiterplatte 16 und das Radom 24 parallel zu einer gedachten Montageachse 30 zusammengesetzt.

Das Radom 24 ist mittels insgesamt vier im wesentlichen identischen Klammerverbindungen 32 an dem Grundgehäuseteil 22 fixiert. Das Radom 24 wird mit den Klammerverbindungen 32 parallel zur Montageachse 30 gegen den Rand der Umfangswand des Grundgehäuseteils 22 gedrückt. Die Klammerverbindungen 32 befinden sich auf gegenüberliegenden Längsseiten des Radarsensorgehäuses 12. Dabei sind jeweils zwei der Klammerverbindungen 32 auf der gleichen Längsseite des Radarsensorgehäuses 12 angeordnet.

Jede Klammerverbindung 32 umfasst ein elastisches Klammerelement 34 aufseiten des Radoms 24 und eine Rastnase 36 aufseiten des Grundgehäuseteils 22.

Die Rastnasen 36 befinden sich an der äußeren Umfangsseite des Grundgehäuseteils 22 und erheben sich bezüglich der Montageachse 30 nach radial außen. Jede der Rastnasen 36 weist auf ihrer der Einbauseite 26 zugewandten Seite eine keilartige Schräge 38 auf. Auf der der Einbauseite 26 abgewandten Seite verfügt jede Rastnase 36 über eine Rastnut 40.

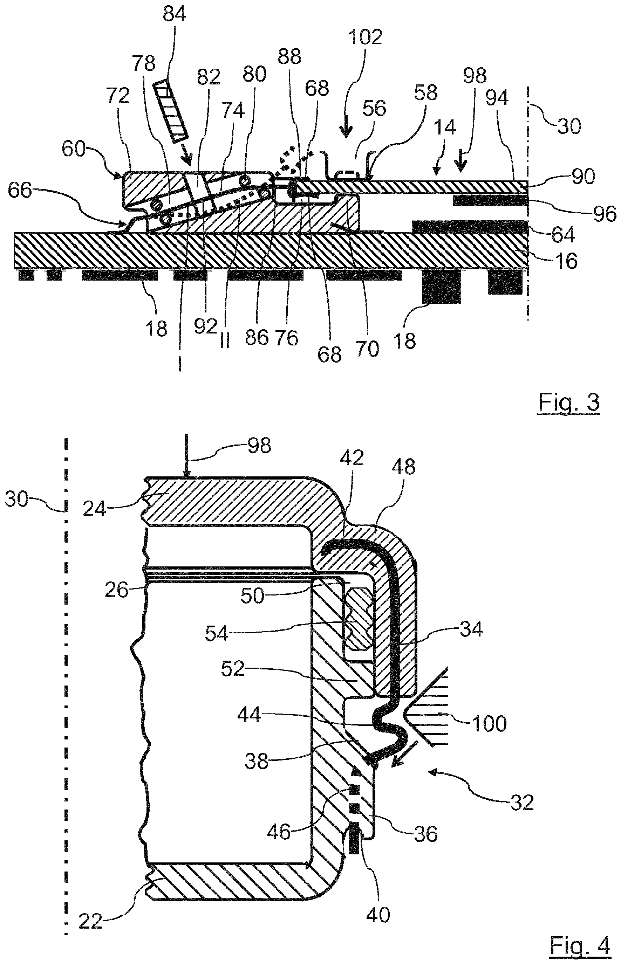

Die Klammerelemente 34 sind jeweils elastische Federelemente beispielsweise aus Federstahl. Die Klammerelemente 34 werden im Folgenden anhand des Klammerelements 34 aus der Figur 4 näher erläutert.

Im Bereich eines seiner Enden 42 weist das Klammerelement 34 eine Biegung etwa um 90° auf. Der Abschnitt des Klammerelements 34 im Be reich dieser Biegung ist in die Umfangswand 28 des Radoms 24 eingebettet. Das Klammerelement 34 erstreckt sich im Bereich seines Endes 42 vor der 90°-Biegung bezü glich der Montageachse 30 nach radial innen in einen deckelseitigen Absatz 48 des Radoms 24. Auf der dem Ende 42 abgewandten Seite der 90°-Biegung erstreckt sich das Klammerelement 34 grob etwa parallel zur Montageachse 30.

Das Klammerelement 34 verfügt in seinem etwa parallel zur Montageachse 30 verlaufenden Mittelteil über eine S-förmige Biegung 44. Die S-förmige Biegung 44 befindet sich in einem Bereich außerhalb des Materials der Umfangswand 28. Die S-förmige Biegung 44 befindet sich in montiertem Zustand etwa auf Höhe der keilartigen Schräge 38 der entsprechenden Rastnase 36. Ein Biegeabschnitt der S-förmigen Biegung 44, welcher der Umfangswand 28 des Radoms 24 zugewandt ist, erhebt sich zur Umfangswand des Grundgehäuseteils 22 hin. Ein Biegeabschnitt der S-förmigen Biegung 44, welcher der Umfangswand 28 des Radoms 24 abgewandt ist, erhebt sich von der Umfangswand des Grundgehäuseteils 22 weg nach außen.

Zwischen der S-förmigen Biegung 44 und einem freien Ende des Klammerelements 34 weist das Klammerelement 34 eine Rastöse 46 auf. Die Rastöse 46 hat die Form eines rechteckigen Fensters. Die Innenabmessungen der Rastöse 46 sind etwas größer als die entsprechenden Außenabmessungen der Rastnase 36. So kann die Rastöse 46 von außen über die Rastnase 36 geführt werden. In der Figur 4 sind der besseren Verständlichkeit wegen die eigentlich durch die Rastnase 36 verdeckten Seitenbegrenzungen der Rastöse 46 gestrichelt angedeutet.

Der deckelseitige Absatz 48 bildet eine vom Radom 24 axial zur Montageachse 30 betrachtet hintere Begrenzung einer Dichtungsnut 50. Die Dichtungsnut 50 erstreckt sich bezüglich der Montageachse 30 umfangsmäßig entlang der äußeren Umfangsseite des Grundgehäuseteils 22 und umgibt die Einbauseite 26.

Auf der dem deckelseitigen Absatz 48 bezüglich der Montageachse 30 axial gegenüberliegenden Seite wird die Dichtungsnut 50 vorne von einem Vorsprung 52 des Grundgehäuseteils 22 begrenzt. Der Vorsprung 52 erstreckt sich bezüglich der Montageachse 30 umfangsmäßig an der äußeren Umfangsseite des Grundgehäuseteils 22. Der Vorsprung 52 befindet sich axial zur Montageachse 30 betrachtet zwischen der Einbauseite 26 und der Rastnase 36.

Die Dichtungsnut 50 wird auf ihrer bezüglich der Montageachse 30 radial inneren Seite von der Umfangswand des Grundgehäuseteils 22 begrenzt. Auf der radial äußeren Seite wird die Dichtungsnut 50 von der Umfangswand 28 des Radoms 24 begrenzt. Die Umfangswand 28 überlappt den Vorsprung 22. Die Umfangswand 28 liegt mit ihrer bezüglich der Montageachse 30 radial inneren Umfangsseite an der radial äußeren Umfangsseite des Vorsprung 22 an.

In der Dichtungsnut 50 ist eine bezüglich der Montageachse 30 umfangsmäßige zusammenhängende Dichtung 54 in radialer Richtung dichtend angeordnet.

Das Radom 24 weist ferner insgesamt vier gehäuseseitige Klemmelemente 56 einer Klemmeinrichtung 58 zum festklemmen des Keramiksubstrats 90 mit der Radarantenne 14 auf. Die gehäuseseitigen Klemmelemente 56 sind in der Figur 2, in der das Radom 24 der besseren Übersichtlichkeit wegen transparent dargestellt ist, und der Figur 3 gezeigt. Die gehäuseseitigen Klemmelemente 56 sind an der dem Grundgehäuseteil 22 zugewandten inneren Deckenseite des Radoms 24 angeordnet. Bei den gehäuseseitigen Klemmelementen 56 handelt es sich jeweils um etwa quaderförmige Podeste, welche sich in Richtung der Montageachse 30 betrachtet von der Deckenseite des Radoms 24 weg erstrecken. Jeweils zwei der gehäuseseitigen Klemmelemente 56 befinden sich im Bereich der gleichen Umfangsseite der Umfangswand 28, an der auch jeweilige Klammerelemente 34 angeordnet sind. Die gehäuseseitigen Klemmelemente 56 befinden sich in der Projektion betrachtet etwa zwischen den jeweiligen benachbarten Klammerelementen 34.

Der Verbindungsstecker 200 befindet sich in einer Umfangswand 28 des Radoms 24 zwischen den dortigen Klammerverbindungen 32. Der Verbindungsstecker 200 umfasst mehrere, beispielhaft identische elektrische Verbindungselemente 202 in Form von länglichen gebogenen Metallteilen, beispielsweise gebogenen Metallstiften. Die elektrischen Verbindungselemente 202 sind nebeneinander in einem Halteelement 204 aus Kunststoff eingebettet. Das Halteelement 204 mit den Verbindungselementen 202 ist seinerseits in das Material des Radoms 24 eingebettet. Die elektrischen Verbindungselemente 202 führen so durch die Umfangswand 28 des Radoms 24 hindurch nach au-ßen.

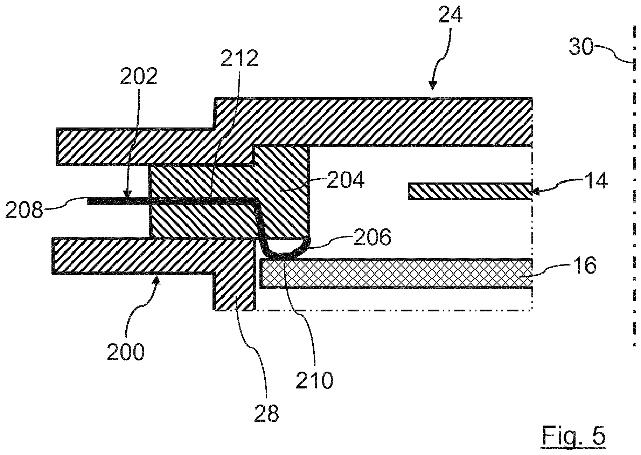

Die Verbindungselemente 202 werden im Folgenden anhand eines in der Figur 5 gezeigten Beispiels näher erläutert. Das Verbindungselement 202 ist insgesamt einteilig aufgebaut. Das Verbindungselement 202 weist einen inneren Kontaktabschnitt 206 und einen äußeren Kontaktabschnitt 208 auf.

Der innere Kontaktabschnitt 206 befindet sich innerhalb des Radarsensorgehäuses 12 und dient zur elektrischen Kontaktierung einer entsprechenden Kontaktfläche 210, beispielsweise einer Leiterbahn, auf der Leiterplatte 16. Der innere Kontaktabschnitt 206 ist als Oberflächen-Kontakt ausgestaltet. Die Kontaktierung erfolgt dabei ausschließlich an den entsprechenden Oberflächen des inneren Kontaktabschnitt 206 und der entsprechenden Kontaktfläche 210.

Der innere Kontaktabschnitt 206 befindet sich auf der dem Grundgehäuseteil 22 zugewandten Seite des Halteelements 204. Auf der dem Grundgehäuseteil 22 abgewandten Seite ist der innere Kontaktabschnitt 206 durch einen entsprechenden Abschnitt des Halteelements 204 gestützt. Der innere Kontaktabschnitt 206 ist von der Leiterplatte 16 aus betrachtet konvex gebogen. Er ist elastisch biegbar. Der innere Kontaktabschnitt 206 weist also eine elastisch verformbar Vorbiegung auf, mit der eine mechanische Vorspannung und ein entsprechender Toleranzausgleich in Richtung parallel zur Montageachse 30 erfolgen kann.

Die Kontaktflächen 210 der Leiterplatte 16, an denen die entsprechenden inneren Kontaktabschnitte 206 der Verbindungselemente 202 elektrisch leitend anliegen können, befinden sich auf der Seite der Leiterplatte 16, auf der auch die Radarantenne 14 angeordnet ist.

Der äußere Kontaktabschnitt 208 ist als Stecker ausgebildet. Der äußere Kontaktabschnitt 208 erstreckt sich beispielhaft quer zur Montageachse 30 nach außen. Der äußere Kontaktabschnitt 208 kann in eine entsprechende Buchse auf Seiten der Signal- und/oder Stromversorgungsleitung zur elektrischen Verbindung eingesteckt werden.

Die elektrischen Verbindungselemente 202 sind jeweils mit einem Halteabschnitt 212 zwischen dem inneren Kontaktabschnitt 206 und dem äußeren Kontaktabschnitt 208 in dem Halteelement 204 eingebettet. Die Halteabschnitte 212 erstrecken sich jeweils vom äußeren Kontaktabschnitt 208 zunächst in gleicher Richtung, um nach einer Biegung etwa parallel zur Montageachse 30 in den jeweiligen inneren Kontaktabschnitt 206 überzugehen.

Bei der Leiterplatte 16 handelt es sich um eine sogenannte FR4-Leiterkarte. Beispielhaft ist die Leiterplatte 16 als rechteckige ebene Platte ausgestaltet. Sie ist in hier nicht weiter interessierender Weise in dem Grundgehäuse 22 so befestigt, dass sich ihre gegenüberliegenden Oberflächen jeweils senkrecht zur Montageachse 30 erstrecken. Die Bauteile 18 zur Signalverarbeitung und Spannungsversorgung sind auf der der Einbauseite 26 abgewandten Oberfläche der Leiterplatte 16 montiert und mit entsprechenden Leiterbahnen elektrisch verbunden.

Auf der der Einbauseite 26 zugewandten Oberfläche der Leiterplatte 16 sind zwei längliche Anschlussleisten 60 einer Anschlussvorrichtung 62 angeordnet. Die Anschlussvorrichtung 62 dient dem mechanischen und elektrischen Anschluss des Keramiksubstrats 90 mit der Radarantenne 14. Die Anschlussleisten 60 verlaufen, wie in der Figur 2 gezeigt, parallel zueinander und erstrecken sich jeweils zwischen denjenigen Umfangsseiten des Radarsensorgehäuses 12, an denen die jeweiligen Klammerverbindungen 32 angeordnet sind. Ein Ausschnitt der Leiterplatte 16 mit einer der der Anschlussleisten 60 ist in der Figur 3 im Schnitt gezeigt. Die Anschlussleisten 60 sind mechanisch mit der Leiterplatte 16 und elektrisch mit entsprechenden Leiterbahnen der Leiterplatte 16 verbunden.

Zwischen den beiden Anschlussleisten 60 ist ein in der Figur 3 angedeutetes Absorberelement 64 flächig an der entsprechenden Oberfläche der Leiterplatte 16 befestigt, beispielsweise aufgeklebt. Das Absorberelement 64 dient zur Dämpfung von elektromagnetischer Strahlung.

Der Aufbau der beiden Anschlussleisten 60 ist im Wesentlichen identisch. Im Folgenden wird der Aufbau anhand der Anschlussleiste 60 aus der Figur 3 näher erläutert.

Die Anschlussleiste 60 verfügt über eine elektrische Kontakteinrichtung 66 zur elektrischen Kontaktierung entsprechender elektrischer Kontaktbereiche 68 aufseiten des Keramiksubstrats 90 mit der Radarantenne 14. Ferner umfasst die Anschlussleiste 60 ein anschlussseitiges Klemmelement 70 der Klemmeinrichtung 58. Darüber hinaus weist die Anschlussleiste 60 einen länglichen Anschlussgrundkörper 72 auf, an dem das anschlussseitige Klemmelement 70 einstückig realisiert ist und in welchem eine Mehrzahl von elektrischen Kontaktelementen 74 der Kontakteinrichtung 66 gelagert sind.

Der Anschlussgrundkörper 72 ist aus elektrisch isolierendem Material. Er erstreckt sich zwischen den Umfangsseiten des Radarsensorgehäuses 12. Auf einer Längsseite, die der anderen Anschlussleiste 60 der Anschlussvorrichtung 62 zugewandt ist, befindet sich das anschlussseitige Klemmelement 70. Das anschlussseitige Klemmelement 70 erhebt sich podestartig von der Leiterplatte 16 weg und über die gesamte Länge des Anschlussgrundkörpers 72.

Auf der dem anderen Anschlusskörper 72 abgewandten Seite des anschlussseitigen Klemmelements 70 ist eine Vertiefung 76 angeordnet. Die Vertiefung 76 ist auf ihrer der Leiterplatte 16 abgewandten Seite offen. Sie erstreckt sich nahezu über die gesamte Länge des Anschlussgrundkörpers 72.

Neben der Vertiefung 76 erhebt sich ein Podest, in dem sich ein Führungsspalt 78 für die elektrischen Kontaktelemente 78 befindet. Der Führungsspalt 78 erstreckt sich einerseits nahezu über die gesamte Länge des Anschlussgrundkörpers 72. Andererseits verbindet der Führungsspalt 78 eine der anderen Anschlussleiste 60 abgewandte Rückseite des Anschlussgrundkörpers 72 mit der Vertiefung 76. Auf der Rückseite des Anschlusskörpers 72 öffnet sich der Führungsspalt 78 auf der der Leiterplatte 16 zugewandten Seite.

Im Bereich einer Öffnung des Führungsspalts 78 zur Vertiefung 76 und der Öffnung zur Rückseite ist jeweils ein Paar von Haltestäben 80 zur Positionierung und Lagerung der elektrischen Kontaktelemente 74 angeordnet. Die Haltestäbe 80 erstrecken sich parallel zueinander entlang des Anschlussgrundkörpers 72. Die Haltestäbe 80 sind aus elektrisch isolierendem Material.

Durch die der Leiterplatte 16 abgewandte Oberseite des Podestes des Anschlussgrundkörpers 62 führt eine Werkzeugaufnahme 82. Die Werkzeugaufnahme 82 führt in den Führungsspalt 78. Die Werkzeugaufnahme 82 hat die Form eines langgestreckten Spaltes, der sich in Längsrichtung des Führungsspalts 78 über diesen hinaus erstreckt. Die Werkzeugaufnahme 82 dient zur Aufnahme und Führung eines externen Werkzeugs 84 zur Betätigung der Kontaktelemente 74.

Die elektrische Kontakteinrichtung 66 verfügt über eine Vielzahl von elektrischen Kontaktelementen 74, welche nebeneinander entlang des Anschlussgrundkörpers 72 in dem Führungsspalt 78 angeordnet sind. Die elektrischen Kontaktelemente 74 sind untereinander nicht in elektrischem Kontakt. Die Kontaktelemente 74 des gezeigten Ausführungsbeispiels sind im Wesentlichen identisch aufgebaut. Jedes Kontaktelement 74 besteht aus einem länglichen elastischen elektrischen Leiter, beispielsweise eine Metallfeder.

Im Folgenden werden die Kontaktelemente 74 anhand des in Figur 3 gezeigten Kontaktelements 74 näher erläutert. Das Kontaktelement 74 erstreckt sich durch die beiden Öffnungen des Führungsspalts 78. Das Kontaktelement 74 ist zwischen den entsprechenden Haltestäben 80 der beiden Haltestab-Paare gelagert. Mit einem Ende ist das Kontaktelement 74 beispielsweise mittels einer Lötverbindung elektrisch und mechanisch mit einem entsprechenden elektrisch leitenden Bereich der Leiterplatte 16 verbunden. An dem freien Ende ist das Kontaktelement 74 außerhalb des Führungsspalts 78 mit einem Kontaktarm 86 ausgestattet. Der Kontaktarm 86 geht an seinem Ende in zwei gabelförmig angeordnete Kontaktfinger 88 über.

In einer in der Figur 3 angedeuteten Kontaktposition I des Kontaktarms 86 umgreifen die Kontaktfinger 88 einen Rand des Keramiksubstrats 90 auf in Richtung der Montageachse 30 betrachtet gegenüberliegenden Seiten.

Das Kontaktelement 74 weist ferner einen Betätigungsabschnitt 92 auf. Der Betätigungsabschnitt 92 befindet sich zwischen dem Kontaktarm 86 und dem an der Leiterplatte 16 befestigten Ende des Kontaktelements 74. Der Betätigungsabschnitt 92 ist innerhalb des Führungsspalts 78 im Bereich der Werkzeugaufnahme 82 angeordnet. An dem Betätigungsabschnitt 92 kann das Werkzeug 84 angreifen und damit den Kontaktarm 86 aus der Kontaktposition I in eine Zusammenbauposition II bewegen. Die Zusammenbauposition II des Kontaktarms 86 ist in der Figur 3 gestrichelt angedeutet. In der Zusammenbauposition II sind die Kontaktfinger 88 von der Leiterplatte 16 weg in Richtung der Einbauseite 26 gebogen. Die Gabel, welche durch die Kontaktfinger 88 gebildet ist, ist in der Zusammenbauposition II bereit zur Aufnahme des Keramiksubstrats 90.

Das Keramiksubstrat 90 hat beispielhaft die Form einer rechteckigen Platte. Das Keramiksubstrat 90 ist aus Mehrlagenkeramik, beispielsweise LTCC, gebildet. Die der Einbauseite 26 des Grundgehäuseteils 22 zugewandte Plattenfläche des Keramiksubstrats 90 bildet eine Abstrahlseite 94 für die Radarantenne 14. Im Bereich der Abstrahlseite 94 weist das Keramiksubstrat 90 entsprechende, in den Figuren nicht näher bezeichnete Antennenstrukturen auf. Außerdem befinden sich im Bereich der den Anschlussleisten 60 zugewandten Längsrändern auf der Abstrahlseite 94 ein Teil der elektrischen Kontaktbereiche 68, welche den in der Figur 3 oberen Kontaktfingern 88 der jeweiligen Kontaktelementen 74 zugeordnet sind.

Auf der der Abstrahlseite 94 abgewandten Rückseite des Keramiksubstrats 90 sind im Bereich der Längsränder des Keramiksubstrats 90 weitere elektrische Kontaktbereiche 68 angeordnet, welche den in der Figur 3 unteren Kontaktfingern 88 der entsprechenden Kontaktelemente 74 zugeordnet sind. Des Weiteren ist auf der Rückseite des Keramiksubstrats 90 ein Radar-TRX-Chip 96 angeordnet und entsprechend elektrisch kontaktiert. Der Radar-TRX-Chip 96 weist einen Sender und einen Empfänger für entsprechende Radarsignale auf. Der Radar-TRX-Chip 96 ist in dem freien Bereich zwischen dem Keramiksubstrat 90 und der Leiterplatte 16 angeordnet. Der Radar-TRX-Chip 96 befindet sich zwischen den Anschlussleisten 60.

Zur Herstellung des Radarsensors 10 werden das Grundgehäuseteil 22, das Radom 24 dem Verbindungsstecker 200, die Leiterplatte 16 mit den Anschlussleisten 60 und das Keramiksubstrat 90 mit der Radarantenne 14 jeweils vormontiert.

Zum Zusammenbau des Radarsensors 10 wird die Leiterplatte 16 mit ihrer die Bauteile 18 tragenden Seite voran in einer Zusammenbaurichtung 98, welche in der Figur 3 durch einen Pfeil angedeutet ist, parallel zur Montageachse 30 in das Grundgehäuseteil 22 eingebaut und dort fixiert.

Anschließend wird in die Werkzeugaufnahmen 82 der beiden Anschlussleisten 60 jeweils eines der Werkzeuge 84 gesteckt. Damit werden die Kontaktelemente 74 gegen ihre elastische Rückstellkraft in ihre Zusammenbauposition II bewegt.

Das Keramiksubstrat 90 mit der Radarantenne 14 wird mit der der Abstrahlseite 94 abgewandten Rückseite voran in Zusammenbaurichtung 98 zwischen den Anschlussleisten 60 so platziert, dass die jeweiligen Längsränder in den Gabeln der Kontaktfinger 88 der entsprechenden Kontaktelemente 74 zu liegen kommen.

Die Werkzeuge 84 werden aus den Werkzeugaufnahmen 82 entfernt, wodurch sich die Kontaktelemente 74 aufgrund ihrer elastischen Rückstellkraft in ihre jeweilige Kontaktposition I bewegen. Dabei werden zwischen den Kontaktfingern 88 und den jeweiligen Kontaktbereichen 68 des Keramiksubstrats 90 jeweilige elektrische Kontakte hergestellt. Das Keramiksubstrat 90 liegt in der korrekten Einbauposition auf den anschlussseitigen Klemmelementen 70, auf gegenüberliegenden Seiten gelagert, auf.

Danach wird das Radom 24 unter Zwischenlage der Dichtung 54 in Zusammenbaurichtung 98 auf das Grundgehäuseteil 22 gesteckt. Dabei werden die entsprechenden freien Enden der Klammerelemente 34 jeweils über die keilartigen Schrägen 38 der Rastnasen 36 geführt. Mit einem Verschlusswerkzeug 100, welches in der Figur 4 angedeutet ist, werden die Klammerelemente 34 an ihren S-förmigen Biegungen 44 zur Umfangswand des Grundgehäuseteils 22 gedrückt, wodurch die jeweiligen Rastösen 46 über die Rastnasen 36 gleiten. Nach Entfernen des Verschlusswerkzeugs 100 verrasten die Klammerelemente 34 aufgrund der elastischen Rückstellkraft der Klammerelemente 34 in den entsprechenden Rastnuten 40 der Rastnasen 36. Bei der Montage des Radoms 24 werden automatisch die inneren Kontaktabschnitte 206 der Verbindungselemente 202 des Verbindungsteckers 200 mit den entsprechenden Kontaktflächen 210 der Leiterplatte 16 elektrisch in Kontakt gebracht.

Durch die elastische Vorspannung der Klammerelemente 34 wird das Radom 24 in Richtung der Montageachse 30 gegen den Rand des Grundgehäuseteils 22 gedrückt. Die gehäuseseitigen Klemmelemente 56 drücken dabei gegen die Abstrahlseite 94 des Keramiksubstrats 90. Die gehäuseseitigen Klemmelemente 56 befinden sich jeweils gegenüber des entsprechenden anschlussseitigen Klemmelements 70. Mit den gehäuseseitigen Klemmelementen 56 wird eine Klemmkraft, in der Figur 3 angedeutet durch einen Pfeil 102, ausgeübt, mit der das Keramiksubstrat 90 und damit die Radarantenne 14 zwischen den gehäuseseitigen Klemmelementen 56 und den jeweiligen anschlussseitigen Klemmelementen 70 eingeklemmt wird. Außerdem werden durch die Klemmkraft 102 die inneren Kontaktabschnitte 206 des Verbindungsteckers 200 gegen die Kontaktflächen 210 der Leiterplatte 16 gepresst.

Zum Ausbau des Keramiksubstrats 90 mit der Radarantenne 14 werden die Verrastungen der Klammerverbindung 32 mithilfe des Verschlusswerkzeugs 100 gelöst. Das Radom 24 wird entgegen der Zusammenbaurichtung 98 von dem Grundgehäuseteil 22 entfernt. Die Werkzeuge 84 werden in die jeweiligen Werkzeugaufnahmen 82 gesteckt, sodass die Kontaktelemente 74 in ihre Zusammenbauposition II bewegt werden. Das Keramiksubstrat 90 mit der Radarantenne 14 wird anschließend entgegen der Zusammenbaurichtung 98 entnommen.

## Patentansprüche

1. Radarsensor (10) für ein Fahrzeug, aufweisend wenigstens ein Radarsensorgehäuse (12), in dem wenigstens eine Radarantenne (14) und wenigstens eine Leiterplatte (16) angeordnet ist, wobei das Radarsensorgehäuse (12) wenigstens ein Grundgehäuseteil (22) mit einer Einbauseite (26), auf der die wenigstens eine Radarantenne (14) und die wenigstens eine Leiterplatte (16) eingebracht werden, und ein Radom (24) aufweist, mit dem die Einbauseite (26) abgedeckt ist und durch welches beim Betrieb des Radarsensors (10) von der wenigstens einen Radarantenne (14) gesendete Signale und/oder zu empfangene Signale hindurch treten können, wobei das Radarsensorgehäuse (12) eine Mehrzahl von elastischen Klammerelementen (34) aufweist, mit denen das Radom (24) an dem wenigstens einen Grundgehäuseteil (22) befestigt werden kann, wobei das Radom (24) wenigstens ein elektrisches Verbindungselement (202) aufweist, das innerhalb des Radarsensorgehäuses (12) wenigstens einen inneren Kontaktabschnitt (206) zur elektrischen Kontaktierung der wenigstens einen Leiterplatte (16) und außerhalb des Radarsensorgehäuses (12) wenigstens einen äußeren Kontaktabschnitt (208) zum Anschluss wenigstens einer elektrischen Leitung aufweist, **dadurch gekennzeichnet, dass** wenigstens ein innerer Kontaktabschnitt (206) als Oberflächen-Kontakt ausgestaltet ist, wenigstens eine Biegung aufweist und zur elektrischen Kontaktierung einer entsprechenden Kontaktfläche (210) auf der wenigsten einen Leiterplatte (16) dient, und dass mithilfe der elastischen Klammerelemente (34) eine mechanische Grundspannung realisiert wird, mit welcher der wenigstens eine innere Kontaktabschnitt (206) gegen die wenigstens eine Kontaktfläche (210) der wenigstens einen Leiterplatte (16) gepresst wird.

2. Radarsensor nach Anspruch 1, **dadurch gekennzeichnet, dass** wenigstens der wenigstens eine innere Kontaktabschnitt (206) wenigstens abschnittsweise elastisch ist.

3. Radarsensor nach Anspruch 1 oder 2, **dadurch gekennzeichnet,** wenigstens ein elektrisches Verbindungselement (202) wenigstens abschnittsweise direkt oder indirekt in das Material des Radoms (24) eingebettet ist.

4. Radarsensor nach einem der vorigen Ansprüche, **dadurch gekennzeichnet, dass** die wenigstens eine Biegung des wenigstens einen inneren Kontaktabschnitts (206) im Bereich der Kontaktierung der entsprechenden Kontaktfläche (210) der wenigstens einen Leiterplatte (16) ist.

5. Radarsensor nach einem der vorigen Ansprüche, **dadurch gekennzeichnet, dass** die wenigstens eine Biegung des wenigstens einen inneren Kontaktabschnitts (206) von der wenigstens einen Leiterplatte (16) aus betrachtet konvex ist.

6. Radarsensor nach einem der vorigen Ansprüche, **dadurch gekennzeichnet, dass** bei einer Erhöhung des Anpressdrucks und einem entsprechenden elastischen Nachgeben des wenigstens einen inneren Kontaktabschnitts (206) die Kontaktfläche des wenigstens einen inneren Kontaktabschnitts (206), welche an einer entsprechenden Kontaktfläche (210) der Leiterplatte (16) elektrisch leitend anliegt, vergrößert werden.

7. Radarsensor nach einem der vorigen Ansprüche, **dadurch gekennzeichnet, dass** der wenigstens eine innere Kontaktabschnitt (206) dem Grundgehäuseteil (22) zugewandt ist.

8. Radarsensor nach einem der vorigen Ansprüche, **dadurch gekennzeichnet, dass** wenigstens ein elektrisches Verbindungselement (202) wenigstens abschnittsweise in einem Halteelement (204) angeordnet ist.

9. Radarsensor nach einem der vorigen Ansprüche, **dadurch gekennzeichnet, dass** wenigstens ein elektrisches Verbindungselement (202) in einer Umfangswand (28) des Radoms (24) angeordnet ist.

10. Radarsensor nach einem der vorigen Ansprüche, **dadurch gekennzeichnet, dass** wenigstens ein elektrisches Verbindungselement (202) mit wenigstens einem inneren Kontaktabschnitt (206) und wenigstens einem äußeren Kontaktabschnitt (208) einteilig ausgestaltet ist.

11. Radarsensor nach einem der vorigen Ansprüche, **dadurch gekennzeichnet, dass** wenigstens ein elektrisches Verbindungselement (202) außerhalb des Radarsensorgehäuses (12) als Teil einer elektrischen Schnellverbindung (200) ausgestaltet ist.

12. Radarsensor nach einem der vorigen Ansprüche, **dadurch gekennzeichnet, dass** mithilfe der elastischen Klammerelemente (34) die mechanische Grundspannung realisiert werden kann, mit welcher zusätzlich auch die wenigstens eine Leiterplatte (16) festgeklemmt und fixiert werden kann.

13. Verfahren zum Zusammenbau eines Radarsensors (10) für ein Fahrzeug, bei dem wenigstens eine Radarantenne (14) und wenigstens eine Leiterplatte (16) in oder an einem Grundgehäuseteil (22) eines Radarsensorgehäuses (12) des Radarsensors (10) angeordnet werden, ein Radom (24) auf das Grundgehäuseteil (22) montiert wird, wobei die wenigstens eine Leiterplatte (16) mit wenigstens einem elektrischen Verbindungselement (202) auf Seiten des Radoms (24) elektrisch kontaktiert wird, und das Radom (24) an dem Grundgehäuseteil (22) mittels einer Mehrzahl von elastischen Klammerelementen (34) fixiert wird, wobei das wenigstens eine Verbindungselement (202) außerhalb des Radarsensorgehäuses (12) mit wenigstens einer elektrischen Leitung verbunden werden kann, **dadurch gekennzeichnet, dass** eine Kontaktfläche (210) der wenigstens einen Leiterplatte (16) bei der Montage des Radoms (24) auf das Grundgehäuseteil (22) mit wenigstens einem inneren Oberflächen-Kontaktabschnitt (206), der wenigstens eine Biegung aufweist, wenigstens eines elektrischen Verbindungselements (202) auf Seiten des Radoms (24) elektrisch kontaktiert wird, und dass mithilfe der elastischen Klammerelemente (34) eine mechanische Grundspannung realisiert wird, mit welcher der wenigstens eine innere Kontaktabschnitt (206) gegen die wenigstens eine Kontaktfläche (210) der wenigstens einen Leiterplatte (16) gepresst werden.

## Claims

1. Radar sensor (10) for a vehicle, having at least one radar sensor housing (12), in which at least one radar antenna (14) and at least one printed circuit board (16) are arranged, wherein the radar sensor housing (12) has at least one basic housing part (22) having an installation side (26), on which the at least one radar antenna (14) and the at least one printed circuit board (16) are introduced, and a radome (24), with which the installation side (26) is covered and through which signals transmitted by the at least one radar antenna (14) and/or signals that are to be received can pass during the operation of the radar sensor (10), wherein the radar sensor housing (12) has a plurality of elastic clamp elements (34), with which the radome (24) can be attached to the at least one basic housing part (22), wherein the radome (24) has at least one electrical connection element (202), which has at least one inner contact section (206) for making electric contact with the at least one printed circuit board (16) within the radar sensor housing (12) and at least one outer contact section (208) for connecting to at least one electrical line outside the radar sensor housing (12), **characterized in that** the at least one inner contact section (206) is configured as a surface contact, has at least one curvature, and serves for making electric contact with a corresponding contact surface (210) on the at least one printed circuit board (16), and **in that** a mechanical basic tension, with which the at least one inner contact section (206) is pressed against the at least one contact surface (210) of the at least one printed circuit board (16), is realized with the aid of the elastic clamp elements (34) .

2. Radar sensor according to Claim 1, **characterized in that** at least the at least one inner contact section (206) is at least partially elastic.

3. Radar sensor according to Claim 1 or 2, **characterized in that** at least one electrical connection element (202) is at least partially embedded directly or indirectly in the material of the radome (24).

4. Radar sensor according to one of the preceding claims, **characterized in that** the at least one curvature of the at least one inner contact section (206) lies in the region of the contact with the corresponding contact surface (210) of the at least one printed circuit board (16) .

5. Radar sensor according to one of the preceding claims, **characterized in that** the at least one curvature of the at least one inner contact section (206) is convex when viewed from the at least one printed circuit board (16) .

6. Radar sensor according to one of the preceding claims, **characterized in that** the contact surface of the at least one inner contact section (206), which rests electrically conductively against a corresponding contact surface (210) of the printed circuit board (16) is enlarged if the contact pressure increases and the at least one inner contact section (206) is correspondingly elastically flexible.

7. Radar sensor according to one of the preceding claims, **characterized in that** the at least one inner contact section (206) faces the basic housing part (22).

8. Radar sensor according to one of the preceding claims, **characterized in that** at least one electrical connection element (202) is at least partially arranged in a holding element (204).

9. Radar sensor according to one of the preceding claims, **characterized in that** at least one electrical connection element (202) is arranged in a circumferential wall (28) of the radome (24).

10. Radar sensor according to one of the preceding claims, **characterized in that** at least one electrical connection element (202) is designed in one piece with at least one inner contact section (206) and at least one outer contact section (208).

11. Radar sensor according to one of the preceding claims, **characterized in that** at least one electrical connection element (202) outside the radar sensor housing (12) is designed as part of an electrical quick connection (200) .

12. Radar sensor according to one of the preceding claims, **characterized in that** the mechanical basic tension, with which the at least one printed circuit board (16) can also be clamped in place and fixed, can be realized with the aid of the elastic clamp elements (34) .

13. Method for assembling a radar sensor (10) for a vehicle, in which at least one radar antenna (14) and at least one printed circuit board (16) are arranged in or at a basic housing part (22) of a radar sensor housing (12) of the radar sensor (10), a radome (24) is mounted to the basic housing part (22), wherein the at least one printed circuit board (16) comes into electric contact with at least one electrical connection element (202) on the side of the radome (24), and the radome (24) is fixed to the basic housing part (22) by means of a plurality of elastic clamp elements (34), wherein the at least one connection element (202) outside the radar sensor housing (12) can be connected to at least one electrical line, **characterized in that** a contact surface (210) of the at least one printed circuit board (16), during the mounting of the radome (24) to the basic housing part (22), is brought into electric contact with at least one inner surface contact section (206), having at least one curvature, of at least one electrical connection element (202) on the side of the radome (24), and **in that** a mechanical basic tension, with which the at least one inner contact section (206) is pressed against the at least one contact surface (210) of the at least one printed circuit board (16), is realized with the aid of the elastic clamp elements (34).

## Revendications

1. Capteur radar (10) destiné à un véhicule et comportant au moins un boîtier de capteur radar (12) dans lequel au moins une antenne radar (14) et au moins une carte de circuit imprimé (16) sont disposées, le boîtier de capteur radar (12) comportant au moins une partie de boîtier de base (22) pourvue d'un côté de montage (26) sur lequel l'au moins une antenne radar (14) et l'au moins une carte de circuit imprimé (16) sont montées, et un radôme (24), recouvrant le côté de montage (26) et traversé par des signaux émis par l'au moins une antenne radar (14) et/ou des signaux reçus lorsque le capteur radar (10) est en fonctionnement, le boîtier de capteur radar (12) comportant une pluralité d'éléments de serrage élastiques (34) permettant de fixer le radôme (24) à l'au moins une partie de boîtier de base (22), le radôme (24) comportant au moins un élément de liaison électrique (202) qui comporte à l'intérieur du boîtier de capteur radar (12) au moins une portion de contact intérieure (206) destinée à établir un contact électrique avec l'au moins une carte de circuit imprimé (16) et, à l'extérieur du boîtier de capteur radar (12), au moins une portion de contact extérieure (208) destinée au raccordement d'au moins une ligne électrique, **caractérisé en ce qu'**au moins une portion de contact intérieure (206) est conçue comme un contact de surface, présente au moins un coude et sert à établir un contact électrique avec une surface de contact correspondante (210) de l'au moins une carte de circuit imprimé (16), et **en ce que** les éléments de serrage élastiques (34) permettent de réaliser une contrainte de base mécanique avec laquelle l'au moins une portion de contact intérieure (206) est pressée contre l'au moins une surface de contact (210) de l'au moins une carte de circuit imprimé (16).

2. Capteur radar selon la revendication 1, **caractérisé en ce que** l'au moins une portion de contact intérieure (206) est au moins en partie élastique.

3. Capteur radar selon la revendication 1 ou 2, **caractérisé en ce qu'**au moins un élément de liaison électrique (202) est au moins en partie noyé directement ou indirectement dans la matière du radôme (24) .

4. Capteur radar selon l'une des revendications précédentes, **caractérisé en ce que** l'au moins un coude de l'au moins une portion de contact intérieure (206) est situé dans la zone de contact de la surface de contact correspondante (210) de l'au moins une carte de circuit imprimé (16) .

5. Capteur radar selon l'une des revendications précédentes, **caractérisé en ce que** l'au moins un coude de l'au moins une portion de contact intérieure (206) est convexe lorsqu'il est observé depuis l'au moins une carte de circuit imprimé (16).

6. Capteur radar selon l'une des revendications précédentes, **caractérisé en ce que**, lors d'une augmentation de la pression de contact et d'une flexion élastique correspondante de l'au moins une portion de contact intérieure (206), la surface de contact de l'au moins une portion de contact intérieure (206), qui est en appui de manière électriquement conductrice sur une surface de contact correspondante (210) de la carte de circuit imprimé (16), est agrandie.

7. Capteur radar selon l'une des revendications précédentes, **caractérisé en ce que** l'au moins une portion de contact intérieure (206) est dirigée vers la partie de boîtier de base (22).

8. Capteur radar selon l'une des revendications précédentes, **caractérisé en ce qu'**au moins un élément de liaison électrique (202) est disposé au moins en partie dans un élément de retenue (204).

9. Capteur radar selon l'une des revendications précédentes, **caractérisé en ce qu'**au moins un élément de liaison électrique (202) est disposé dans une paroi périphérique (28) du radôme (24) .

10. Capteur radar selon l'une des revendications précédentes, **caractérisé en ce qu'**au moins un élément de liaison électrique (202) est conçu d'une seule pièce avec au moins une portion de contact intérieure (206) et au moins une portion de contact extérieure (208).

11. Capteur radar selon l'une des revendications précédentes, **caractérisé en ce qu'**au moins un élément de liaison électrique (202) à l'extérieur du boîtier de capteur radar (12) est conçu comme une partie d'une connexion électrique rapide (200).

12. Capteur radar selon l'une des revendications précédentes, **caractérisé en ce que** les éléments de serrage élastiques (34) peuvent être utilisés pour réaliser la contrainte de base mécanique avec laquelle l'au moins une carte de circuit imprimé (16) peut également être serrée et fixée.

13. Procédé d'assemblage d'un capteur radar (10) destiné à un véhicule et dans lequel au moins une antenne radar (14) et au moins une carte de circuit imprimé (16) sont disposées dans ou sur une partie de boîtier de base (22) d'un boîtier de capteur radar (12) du capteur radar (10), un radôme (24) est monté sur la partie de boîtier de base (22), l'au moins une carte de circuit imprimé (16) étant en contact électrique avec au moins un élément de liaison électrique (202) sur des côtés du radôme (24), et le radôme (24) est fixé à la partie de boîtier de base (22) au moyen d'une pluralité d'éléments de serrage élastiques (34), l'au moins un élément de liaison (202) à l'extérieur du boîtier de capteur radar (12) pouvant être relié à au moins une ligne électrique, **caractérisé en ce que**, lorsque le radôme (24) est monté sur la partie de boîtier de base (22), une surface de contact (210) de l'au moins une carte de circuit imprimé (16) est en contact électrique avec au moins une portion de contact de surface intérieure (206), qui comporte au moins un coude, d'au moins un élément de liaison électrique (202) sur des côtés du radôme (24), et **en ce que** des éléments de serrage élastiques (34) réalisent une contrainte de base mécanique avec laquelle l'au moins une portion de contact intérieure (206) est pressée contre l'au moins une surface de contact (210) de l'au moins une carte de circuit imprimé (16) .
